# EUROPEAN PATENT APPLICATION

(11) **EP 3 524 901 A1**
(43) Date of publication of application: **14.08.2019**
(21) Application number: 19161768.7
(22) Date of filing: 24.01.2017
(51) Int. Cl.: F24S 10/40, F24S 23/79

(54) **COMPACT LINEAR FRESNEL REFLECTIVE SOLAR CONCENTRATOR DESIGNED FOR DIRECT MOLTEN SALT OPERATION AS HEAT TRANSFER FLUID IN EVACUATED TUBES**

(30) Priority: 25.01.2016 PT 2016109108; 27.01.2016 PT 2016109115
(62) Divisional of application: 17704839.4
(71) Applicant: Universidade de Évora, 7000-803 Évora (PT)
(72) Inventor: CHAVES, Júlio César Pinto, 3030-378 Coimbra (PT); CANAVARRO, Diogo Canhão De Sousa, 7000-528 Évora (PT); COLLARES PEREIRA, Manuel Pedro Ivens, 1600-608 Lisboa (PT)
(74) Representative: Alves Moreira, Pedro

(57) **Abstract**

A new Compact Linear Fresnel Reflector (CLFR) "Etendue-Matched" concentrator designed for two evacuated tubular receivers with a double set of TERC (Tailored Edge Ray Concentrator) type asymmetric second stage secondary and a double set of second stage asymmetric CEC (Compound Elliptical Concentrator) combinations, aiming at operating temperatures above 560°C.

## Description

### Field

Concentrated Solar Power (CSP), solar thermal electricity production with high linear (Fresnel-type) concentration.

### Subject

Within the CSP (Concentrated Solar Power) field, Fresnel concentrators are renowned for their potential cost-effectiveness. Nevertheless, this technology must increase its overall efficiency in order to become more competitive with other CSP technologies. One possibility is to use second-stage concentrators to reach higher concentration factors (above 50 for large half acceptance angles (≈ 1deg) and use evacuated tubular receivers to work at higher temperatures. This invention proposes a Compact Linear Fresnel Reflector (CLFR) "Etendue-Matched" concentrator aiming at operating temperatures above 560°C in three preferred embodiments: (i) one designed for two (virtual) flat receivers with a TERC type asymmetric second stage secondary combined with an involute type optics matching the virtual flats to the evacuated tubular receivers; (ii) another with a TERC type asymmetric second stage designed directly for the evacuated tubular receiver and (iii) another composed by a conventional flat Fresnel primary (composed by a finite number of heliostats) and a double CEC (Compound Elliptical Concentrator) designed for a tubular vacuum receiver. In both cases an almost no losses in the gap solution can be implemented with a V-groove type mirror implemented behind the glass cover.

### Background

Among the main CSP (Concentrated Solar Power) technologies, Fresnel concentrators (LFR) are one of the most promising solutions due to their potential lower cost per MW installed. Nevertheless, this technology is facing a substantial challenge to increase its solar-electricity efficiency conversion which, nowadays, is around 8-9%, in contrast with Parabolic Troughs which is around 14-16%, as explained in Morin, G., et al., Comparison of Linear Fresnel and Parabolic Trough Collector power plants, Solar Energy 86 (2012) 1-12.

This low efficiency conversion factor is mainly related with the fact that these optics fall short from the theoretical limits of concentration, achieving values of CAP (Concentration Acceptance-Product) around 0.4. The CAP is given by CAP = C*sin(*θ*), where C is the geometric concentration of the concentrator (which for the present case is above 50X) and *θ* is the half-acceptance angle of the concentrator, as explained in Canavarro, D., Chaves, J., Collares-Pereira, M., New second-stage concentrators (XX SMS) for parabolic primaries; Comparison with conventional parabolic troughs concentrators, Solar Energy 92 (2013), pp. 98-105 and in Canavarro, D., Chaves, J., Collares-Pereira, M., Simultaneous Multiple Surface method for Linear Fresnel concentrators with tubular receiver, Solar Energy 110 (2014), pp. 106-116 and in J. Chaves, Introduction to nonimaging optics - Second edition (CRC Press, Boca Raton, 2016) and in Winston, R., Miñano, J.C., Benítez, P., (contributions by Shatz, N., Bortz, J.,C.), Nonimaging Optics, Elsevier Academic Press, Amsterdam, 2005. Non-imaging optics can be used to achieve higher CAP values, hence increasing the potential for higher efficiency conversion factors.

Advanced LFR optics can solve several of current LFR limitations and provide direct solutions to the low cost issue.

In particular, it is important that:
- High concentration can be achieved in order to reduce thermal losses and provide energy at higher temperatures, for higher efficiency in the thermodynamic conversion to electricity;
- "Etendue" be conserved through the optics for higher optical conversion efficiencies;
- Higher concentration in combination with the usual evacuated tubular technology for the receiver provides a larger primary, which, in turn, will reduce the number of rows in a collector field, the length of pipes and associated valves, pumps and other components to feed and move the HTF
- Heat Transfer Fluid - in the system.

Recently, as explained in Canavarro, D., Chaves, J., Collares-Pereira, M., New second-stage concentrators (XX SMS) for parabolic primaries; Comparison with conventional parabolic troughs concentrators, Solar Energy 92 (2013), pp. 98-105 and in Canavarro, D., Chaves, J., Collares-Pereira, M., Simultaneous Multiple Surface method for Linear Fresnel concentrators with tubular receiver, Solar Energy 110 (2014), pp. 106-116, several proposals have been made for highly performing linear concentrators capable of delivering energy between 500 and 600 °C, as part of CSP systems using directly molten salts as HTF (Heat Transfer Fluid) and as thermal energy storage. These high temperatures are within reach of linear solar concentrators, but high efficiencies require high concentration, not just because of the associated thermal losses reduction but also because, for the same evacuated tube, larger concentrations imply large primaries, less receiver length and less pipe length, factors that are quite important when, beyond the associated thermal losses, cost reduction is a key parameter.

As explained in J. Chaves, Introduction to nonimaging optics - Second edition (CRC Press, Boca Raton, 2016), pp. 3-46 and in Winston, R., Miñano, J.C., Benítez, P., (contributions by Shatz, N., Bortz, J., C.), Nonimaging Optics, Elsevier Academic Press, Amsterdam, 2005, high concentration can only be substantially achieved if non imaging optics is used to design the concentrators to be used, since conventional, focusing optics, is very far from the limits of concentration.

Linear Fresnel concentrators have a potential for low cost, given that the primary is built from flat (or nearly flat) mirrors and large primaries can be moved with very simple mechanical solutions, requiring low power; besides the associated fixed second stage concentrators and fixed receivers are a very important asset for the balance of system design, in particular when high temperature and complex HTF are to be used.

Of all primary/secondary concentrator combinations, the TERC - Taylor Edge Ray Concentrator - design is one that approaches the highest concentration possible, as explained in J. Chaves, Introduction to nonimaging optics - Second edition (CRC Press,Boca Raton, 2016), pp. 3-46 and in Winston, R., Miñano, J.C., Benítez, P., (contributions by Shatz, N., Bortz, J.,C.), Nonimaging Optics, Elsevier Academic Press, Amsterdam, 2005, for any given acceptance angle and, thus, is a natural choice for a preferred embodiments of this invention.

Of course the TERCs have to be truncated, since, by definition, they extend to the primary, in the limit blocking all the incoming radiation; thus there is a degree for compromise and that has to be taken into consideration.

The very high temperatures that are aimed at by the use of the present invention, can only be obtained with very low losses, by using evacuated tubular technology (atmospheric receivers cannot be obtained on the market with selective coatings surviving these very high temperatures).

### Brief Description of the Drawings

Fig. 1 - The Advanced Compact Linear Fresnel Concentrator
Fig. 2 - Adaptation to the receiver tube. The length of W must be equal to the flat entrance E.
Fig. 3 - Adaptation to the receiver tube. Now the length of E is equal to the perimeter of tubular receiver R.
Fig. 4 - The new secondary concentrator composed by: (1) TERC mirrors, (2) involute mirrors, (3) tubular receiver, (4) glass cover of the receiver.
Fig. 5 - The new secondary concentrator composed by: (1) TERC mirrors, (2) involute mirrors, (3) tubular receiver, (4) glass cover of the tubular receiver and adapted to the real size of the tubular receiver as shown in Fig. 3.
Fig. 6 - The new secondary concentrator composed by: (1) TERC mirrors, (2) involute mirrors, (3) tubular receiver, (4) glass cover of the tubular receiver and (5) V-groove mirrors.
Fig. 7 - Complete Dual Asymmetric Macrofocal CEC LFR Solar Concentrator
Fig. 8 - Secondary mirror detail composed by: (2) involute mirrors, (3) tubular receiver, (4) glass cover of the tubular receiver, (5) V-groove mirrors and (6) CEC mirrors.
Fig. 9 - The Dual Asymmetric Macrofocal CEC LFR Solar Concentrator with the heliostats at different heights to reduce the shading and blocking losses.
Fig. 10 - The Dual Asymmetric Macrofocal CEC LFR Solar Concentrator with the secondary mirror placed as a single component.
Fig. 11 - Details of the secondary mirrors presented in Fig. 4.

### Description of the Invention

The present invention has a first preferred embodiment which is a new design based on the TERC family, with a very high concentration value of ≈ 50X and conceived for two flat (virtual) receivers, placed on two different towers. This solution requires the conversion of the virtual flat receiver into a tubular receiver, by adding an involute type optics. In this way the preferred embodiment of this invention can thus incorporate the (standard) 70mm diameter receiver evacuated tube.

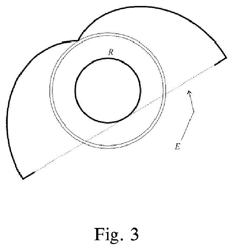

The second preferred embodiment of this invention has the TERC solution directly designed for the evacuated tubular receiver (Fig.3).

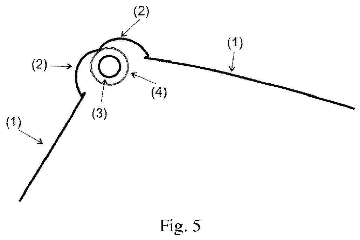

Fig.5 also shows a variation that can be used in all embodiments of the invention: the use of a V-groove (a mirror type explained in Rabl, A., Active Solar Collectors and their applications, Oxford University, Oxford, 1985) type mirror, behind the evacuated tube to eliminate the optical losses from radiation that can escape through the gap between the receiver and the glass envelope.

The use of two towers for a continuous etendue matched (concept of etendue matched explained in explained in Chaves, J., Collares-Pereira, M., Etendue-matched two stage concentrators with multiple receivers, Solar Energy 84 (2010), pp. 196-207), primary confers the proposed embodiments of the invention the characteristics of a Compact LFR (the concept of Compact LFR is explained in Mills, D. and Morrison, G., Compact Linear Fresnel Reflector Solar Thermal Powerplants, Solar Energy 68 (2000), pp. 263-283). This is the very first design of its kind. It allows for a very large "continuous" primary (>25m) typically twice that of commercial LFRs on the market (an example of a commercial LFR is explained in Novatec Solar, *NOVA-1Turnkey solar boiler, mass produced in industrial precision* - *with performance guarantee,* NOVA-1 brochure); this confers the proposed invention the potential for substantial pipe length reduction and associated thermal losses, parasitic losses associated to pumping, heat transfer fluid volume, system components (like valves, pipe bends and connections).

The handling of "etendue" through the concentrating optic (for instance shading and blocking) can be made effectively by placing the mirrors on an "etendue" conserving curve (the concept of "etendue" conserving curve is explained in Chaves, J., Collares-Pereira, M., Etendue-matched two stage concentrators with multiple receivers, Solar Energy 84 (2010), pp. 196-207 and in Chaves, J., Collares-Pereira, M., *Primary concentrator with adjusted etendue combined with secondaries associated to multiple receivers and with convection reduction,* Internacional Patent No. PCT/PT2009/000026) and/or using more than one elevated structure to place the receiver (the compact concept proposed by David Mills, as explained in Mills, D. and Morrison, G., Compact Linear Fresnel Reflector Solar Thermal Powerplants, Solar Energy 68 (2000), pp. 263-283 and in U.S. Pat. No.5,899,199: Mills, D., Solar Energy Collector system, 1999 and in U.S. Pat. No.5,899,199: Mills, D., Solar Energy Collector system, 2000).

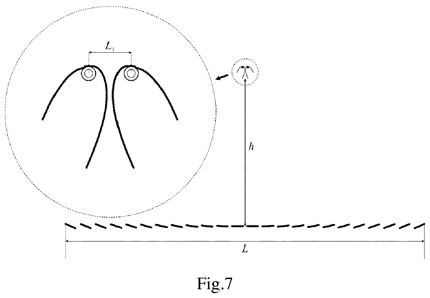

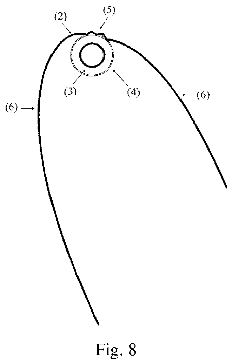

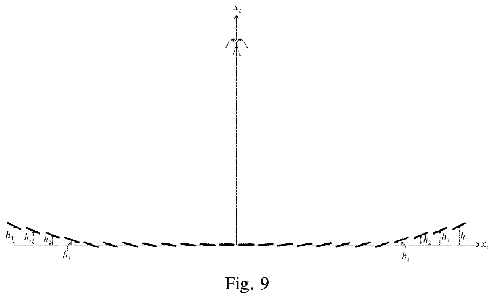

The third embodiment of the present invention proposes solutions to these different aspects in the following novel way:
- It is a compact concept because it uses two receivers, even though it places them on a single elevated structure at a height *h* > 7 m. (see Fig. 7)
- In this preferred embodiment if is built from two asymmetric sets of primary/second stage CEC combinations, for each one of the two evacuated tubular receivers, forming a symmetrical optics with two left and right sides, mirror images of each other (see Fig. 7);
- The primary, in both cases, can be very large (L > 20 m, see Fig. 7) thereby contributing to a substantial reduction of rows in the Linear Fresnel collector field;
- In both preferred embodiments of the invention the primary is formed by finite width mirrors distanced from each other is a way to minimize etendue losses;
- The two evacuated tubular receivers are fed by a single pipe and merge in a single exit pipe contributing to a substantial pipe length reduction of the system pipe manifold;
- "Edge wings": on the edges of the primary, the mirrors will be elevated up to *h*₁, *h*₂, *h*₃ and *h*₄ in order to facilitate the conservation of the etendue (Fig. 9). The exact height of each mirror calculated after fixing the total mirror area;
- The gap losses are eliminated using v-grooves (see Fig. 8).

The detailed description of embodiments of the invention is herein below presented.

### First and second embodiments of the present invention:

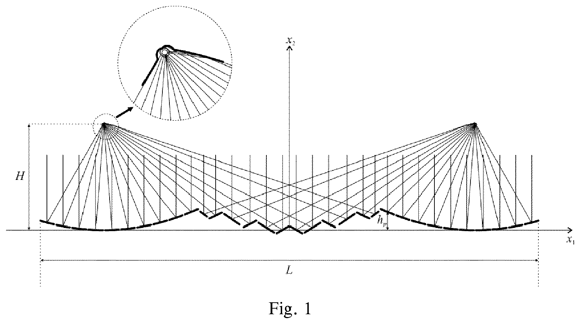

The design of the concentrator performs a joint optimization between the primary and the secondary in order to conserve the etendue of the incoming light and reach the maximum possible concentration. This is done using an etendue-conserving curve (concept explained in Chaves, J., Collares-Pereira, M., Etendue-matched two stage concentrators with multiple receivers, Solar Energy 84 (2010), pp. 196-207) and a TERC second-stage concentrator, as shown in Fig 1. The base configuration is, thus, composed by a primary with a number of heliostats placed over the etendue-conserving curve (with different heights *h*ₚ relatively to the horizontal axis *x*₁) with aperture length *L* > 25m and two flat receivers surround by a TERC secondary mirror placed at a height *H* > 6m.

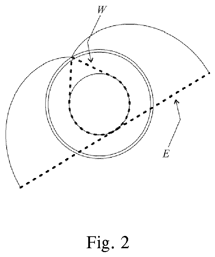

Nevertheless, in order to operate at working temperatures above 560 °C, the receiver must be an evacuated tube and, therefore, changes are necessary in order to fit it in the secondary mirror. The secondary can be adapted to the tubular receiver by using an involute-type (this type of mirror is explained in Winston, R., Miñano, J.C., Benítez, P., (contributions by Shatz, N., Bortz, J., C.), Nonimaging Optics, Elsevier Academic Press, Amsterdam, 2005) optic. This adaptation is done by adjusting the size of the "water drop" W to the size of the entrance *E,* without any further concentration, as shown in Fig. 2.

However, the real receiver is not the "water drop" *W* but instead the corresponding circular receiver, which perimeter is lower than the size of *W.* Thus an adaption of the involute mirrors is necessary. This is done by inserting two small flat mirrors to adapt to the perimeter of the receiver *R,* as shown in Fig. 2. Now the size of the entrance *E* is smaller an equal to the perimeter of *R.*

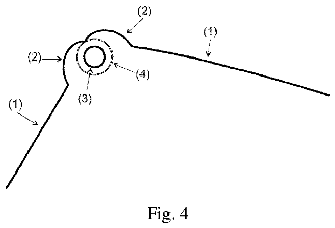

All in all, this corresponds to a new secondary mirror composed by the TERC mirrors and the involute/flat mirrors, as shown in Fig. 4 and Fig.5.

Additionally, the designed and placement of the heliostats may also be adapted to fit better the characteristics of the new receiver/secondary.

This concentrator is design for geometric concentrations C_{g} > 50X and a CAP (Concentration Acceptance Product, as explained in Canavarro, D., Chaves, J., Collares-Pereira, M., Simultaneous Multiple Surface method for Linear Fresnel concentrators with tubular receiver, Solar Energy 110 (2014), pp. 106-116.) > 0.4. The CAP is given by CAP = C_{g}*sin(*θ*) which, for a receiver immersed in air or vacuum has the limit value of 1. Typically, conventional Fresnel concentrators and Parabolic trough concentrators have CAP values ≤ 0.4, as explained in Canavarro, D., Chaves, J., Collares-Pereira, M., Simultaneous Multiple Surface method for Linear Fresnel concentrators with tubular receiver, Solar Energy 110 (2014), pp. 106-116.

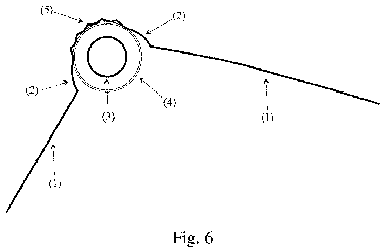

As an alternative, a V-groove (a type of mirror explained in Rabl, A., Active Solar Collectors and their applications Oxford University, Oxford, 1985) mirror can be used to eliminate the gap losses. This also corresponds to a new secondary mirror composed by the TERC mirrors, involute and V-groove mirrors, as shown in Fig. 6. In this case, the TERC is designed directly to the evacuated tubular receiver.

In short, this concentrator presents an optimized primary shape (etendue-conserving curve) in contrast with the conventional flat-shaped primaries used in other Fresnel configurations (examples of conventional Fresnel configurations are explained in U.S. Pat. No.5,899,199: Mills, D., Solar Energy Collector system, 1999 and in U.S. Pat. No.5,899,199: Mills, D., Solar Energy Collector system, 2000 and in Reif, J.H., Reif., K.L., *Solar Concentrator System For Solar Energy plants,* United States Patent Application Publication, US 2011/0067688 A1 (pending)), uses a new TERC-involute/V-groove secondary mirror for tubular vacuum receivers in contrast with a previous proposal (a previous proposal without this secondary-receiver combination is explained in Chaves, J., Collares-Pereira, M., *Primary concentrator with adjusted etendue combined* *with secondaries associated to multiple receivers and with convection reduction,* Internacional Patent No. PCT/PT2009/000026), and proposes a new solution for the gap problem with an adaptation of the involute curve to the real size of the receiver (Fig. 3).

### Third embodiment of the present invention:

The dimensions of the concentrator are determined by the concentration factor and a coupling of "étendue" ("etendue" coupling as explained in J. Chaves, Introduction to nonimaging optics - Second edition (CRC Press,Boca Raton, 2016), pp. 3-46) between the primary and the receiver in order to reach the maximum possible concentration. The general overview of the concentrator is shown in Fig. 1.

In this configuration a tubular vacuum receiver is used and, therefore, it is not possible to extend the involute mirror until the top of the tubular receiver due to the glass cover of the receiver. Thus, a V-groove mirror is used to compensate the missing part of the involute, as shown in Fig. 8. This V-groove eliminates the gap losses (in case some rays would escape from the receiver) and it is composed by a number of 2 "V's". The proximity between the two receivers *L*₁ (Fig. 7) enables the use of a single elevated structure and the same connecting pipe hence reducing both costs and thermal losses.

Another possible configuration of this concentrator is shown in Fig. 9. Due to the mutual shading and blocking losses which occurs in LFR concentrators (effects which are explained in J. Chaves, Introduction to nonimaging optics - Second edition (CRC Press,Boca Raton, 2016), pp. 3-46.), it is possible to place the mirrors with different height values to compensate this effect, especially those which are more tilted relatively to the horizontal. The mirrors placed on the edges of the primary have now different heights *h*₁, *h*₂, *h*₃, *h*₄ relatively to the horizontal axis *x*₁, which reduces the shading and blocking effects. The exact height of each mirror calculated after fixing the total mirror area.

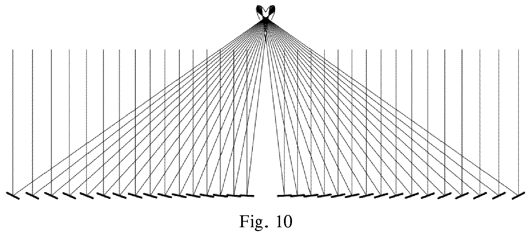

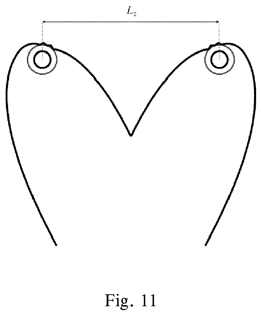

Finally, there is another alternative regarding the placement of the secondary mirrors. In this case, the secondary mirrors are placed as a single component. Fig. 10 shows the complete concentrator and Fig.11 shows the details of the secondary mirrors with a distance *L*₂ between the two receivers.

## Claims

1. A compact linear Fresnel reflective solar concentrator with a Fresnel-type primary and a dual asymmetric macrofocal CEC-type secondary, **characterized by** two evacuated tubular receiver (3) placed in a same elevated structure, adapted with a v-groove mirror (5) to eliminate gap losses and designed to reach higher concentration factors, using molten salt as heat transfer fluid.

2. The compact linear Fresnel reflective solar concentrator according to claim 1, **characterized by** a primary field composed by a series of heliostats placed on the horizontal axis, tracking the apparent motion of the sun during the day and reflecting the light towards two evacuated tubular receivers (3) in connection with the secondary mirror.

3. The compact linear Fresnel reflective solar concentrator according to claim 1 or 2, **characterized by** an "edge wings" primary field, in which the heliostats on the edge of the primary field are elevated from the horizontal axis to reduce the shading and blocking effects.

4. The compact linear Fresnel reflective solar concentrator according to any of claims 1 to 3, **characterized by** a dual asymmetric macrofocal CEC secondary placed side-by-side in a same elevated structure with a distance *L*₁ < 1m.

5. The compact linear Fresnel reflective solar concentrator according to any of previous claims 1 to 4, **characterized by** a dual asymmetric macrofocal CEC secondary placed side-by-side forming a single component.
